# EUROPEAN PATENT APPLICATION

(11) **EP 4 098 547 A1**
(43) Date of publication of application: **07.12.2022**
(21) Application number: 21275074.9
(22) Date of filing: 02.06.2021
(51) Int. Cl.: B63G 9/00, B63G 8/00, G06N 20/00

(54) **METHOD AND APPARATUS FOR CONTROL**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A method of training a machine learning, ML algorithm to control a watercraft is described. The watercraft is a submarine or a submersible submerged in water. The method is implemented, at least in part, by a computer, comprising a processor and a memory, aboard the watercraft. The method comprises: obtaining training data including respective sets of sensor signals, related to respective deterrents, and corresponding actions of a set of communicatively isolated watercraft, including a first watercraft; and training the ML algorithm comprising determining relationships between the respective sets of sensor signals and the corresponding actions of the watercraft of the set thereof. A method of controlling a watercraft by a trained ML algorithm is also described.

## Description

### FIELD

The present invention relates to control of submarines and submersibles.

### BACKGROUND

Navigation by submarines and submersibles underwater requires techniques and technologies not required by surface ships, while use of techniques and technologies used by surface ships may be precluded.

Hence, there is a need to improve control of navigation by submarines and submersibles.

### SUMMARY

A first aspect provides a method of training a machine learning, ML algorithm to control a watercraft, wherein the watercraft is a submarine or a submersible submerged in water, the method implemented, at least in part, by a computer, comprising a processor and a memory, aboard the watercraft, the method comprising:
obtaining training data including respective sets of sensor signals, related to respective deterrents, and corresponding actions of a set of communicatively isolated watercraft, including a first watercraft; and
training the ML algorithm comprising determining relationships between the respective sets of sensor signals and the corresponding actions of the watercraft of the set thereof.

In this way, the ML algorithm is trained by determining relationships between the respective sets of sensor signals and the corresponding actions of the watercraft of the set thereof, thereby providing a trained ML algorithm for controlling a watercraft, for example comprising navigating the watercraft away from a deterrent, such as a trawler. Typically, trawling is a method of commercial fishing, comprising dragging or pulling, by one or more trawlers, a trawl through the water along the sea bed or at a particular depth. A submarine or a submersible may inadvertently catch or be caught by a trawl, risking safety of the submarine or the submersible and/or the one or more trawlers. For example, a trawler may be inadvertently sunk by the submarine or the submersible and/or the submarine or the submersible compromised. Hence, it is desirable to avoid trawls and hence trawlers, which are thus deterrents to be navigated away from. More generally, deterrents are watercraft or obstacles, such as underwater structures or marine life, to be avoided. However, detection of trawls is generally not possible while discrimination between trawlers and other surface water craft may be problematic. Hence, the inventors have determined that autonomous control of navigation of submersed submarines and/or submersibles requires onboard machine learning. Particularly, the inventors have determined that deterrents such as trawlers may be characterised using sensor signals, for example relating to manoeuvres of the deterrents and/or using SONAR.

Generally, at depths below periscope depth, a submersed submarine and/or submersible determines its position and hence navigates using one or more techniques including: dead reckoning using course information obtained from a gyrocompass, measured speed and estimates of local ocean currents; inertial navigation system to estimate position using acceleration, deceleration, and pitch and roll; and bottom contour navigation where detailed hydrographic data have been charted and there is adequate variation in sea floor topography, enabling fathometer depth measurements to be compared with charted depth patterns. It should be understood that at depths below periscope depth, surface and near-surface navigation techniques, such as satellite navigation, terrestrial radio-based navigation, celestial navigation and RADAR navigation, are precluded while active SONAR navigation may be readily detected and hence not used.

It should be understood that the watercraft is a submarine or a submersible, for example a military submarine or submersible. It should be understood that the respective watercraft of the set thereof, including the first watercraft, are submarines or submersibles, for example military submarines or submersibles. It should be understood that the respective watercraft of the set thereof, including the first watercraft, are submerged in water (i.e. underwater, for example below periscope depth). It should be understood that the respective watercraft of the set thereof, including the first watercraft, are communicatively isolated i.e. incommunicado, unable to or prevented from at least receiving transmissions from external sources. Particularly, data transmission to and/or from submerged watercrafts is problematic, generally of low bandwidth (i.e. low data rates) via the water, if possible, and/or requiring a physically tethered surface transmitter and/or receiver, if possible or desirable. Hence, reliance on external data sources is not possible and thus the respective watercraft of the set thereof are self-reliant. It should be understood that the computer (or respective computers) is aboard (i.e. on board the respective watercraft of the set thereof, including the first watercraft). That is, the ML algorithm is trained in isolation, using training data obtained by, for example only obtained by, the respective watercraft of the set thereof, including the first watercraft. Suitable computers are known.

It should be understood that the steps of obtaining the training data and the training the ML algorithm may be consecutive (i.e. successive or serial, for example, obtaining all the training data followed by training the ML algorithm using the obtained training data) or concurrent (i.e. simultaneous or interleaved, for example, obtaining part of the training data such as a policy and a corresponding trajectory for a particular watercraft of the set thereof followed by training the ML algorithm using the obtained part of the training data and repeating).

It should be understood that the training data may be obtained by recording (i.e. logging, storing in memory) the respective sets of sensor signals and corresponding actions of the set of communicatively isolated watercraft, for example by including respective recorders thereof aboard the set of watercraft. In this way, the respective sets of sensor signals and corresponding actions of the set of communicatively isolated watercraft may be obtained from a plurality of voyages through seas and/or oceans, for example according to pre-determined paths. Additionally and/or alternatively, one or more voyages may be repeated, to obtain respective sets of sensor signals and corresponding actions of the set of communicatively isolated watercraft such that the ML algorithm may be trained for the same voyage under different deterrent conditions, for example.

In one example, the sets of sensor signals comprise SONAR signals, preferably passive SONAR signals. Watercraft, such as sea craft, typically use sensor systems including SONAR (SOund NAvigation and Ranging) (also known as sonar) for localizing and tracking contacts. Briefly, passive SONAR includes listening for (i.e. sensing) sounds emitted by contacts and propagated through the water, such as other watercraft and/or marine life. Briefly, active SONAR includes emitting pulses of sound and listening for reflections (i.e. echoes) from such contacts, propagated through the water. Knowing the speed of the sound in water and the time taken between emitting the pulses of sound and detecting the reflections, the acoustic locations of the contacts may be calculated. In this way, SONAR may be used for sensing contacts and acoustic location and tracking of contacts under water, together with measurement of echo characteristics of the contacts.

In one example, obtaining the training data including the respective sets of sensor signals, related to the respective deterrents, comprises sensing the respective sets of sensor signals, for example using a hydroacoustic sensor (also known as a transducer) for sensing sound waves (i.e. SONAR) emitted by the respective deterrents and/or equipment associated therewith, such as trawls, or an array thereof. In this way, respective positions (for example respective relative positions with respect to the watercraft of the set thereof) of the respective deterrents may be estimated. In one example, acquiring the respective sets of sensor signals comprises sensing sound waves emitted by net sounders (i.e. echo sounders with transducers mounted on headlines of nets or trawls). In this way, relative net or trawl positions may be estimated.

In one example, determining the relationships between the respective sets of sensor signals and the corresponding actions of the watercraft of the set thereof comprises detecting manoeuvres of the respective deterrents. Particularly, the inventors have determined that deterrents such as trawlers may be characterised using sensor signals relating to manoeuvres of the deterrents, for example as determined using SONAR. In more detail, while SONAR analysis may allow general classification of deterrents, discrimination between deterrents such as trawlers and other medium or small commercial watercraft may be problematic. However, manoeuvres of the deterrents may indicate trawling patterns, for example.

In one example, determining the relationships between the respective sets of sensor signals and the corresponding actions of the watercraft of the set thereof comprises recognizing patterns of manoeuvres of the respective deterrents. For example, trawlers may manoeuvre at constant speeds, such as in a zigzag pattern (i.e. boustrophedonically). In contrast, purse seines may manoeuvre in tight circles, enclosing schools of fish in their nets. In contrast, longliners may traverse an area back and forth as they alternately set hooks and return to pull them in.

In one example, determining the relationships between the respective sets of sensor signals and the corresponding actions of the watercraft of the set thereof comprises classifying the respective deterrents. In one example, classifying the respective deterrents is according to a set of classes, including a first class, based, at least in part, on a set of labels, including a first label, wherein the set of labels relates to propeller, propulsor, prime mover and/or submerged equipment associated with deterrents. Training of ML algorithms using audio datasets, for example for speech recognition, is known. In one example, the respective sets of sensor signals include audio signals, for example sensed by hydrophones. Suitable training data may be obtained from https://atlanttic.uvigo.es/underwaternoise/ for example. General-purpose speech recognition is typically based on Hidden Markov Models (HMMs). HMMs may be used in speech recognition because a speech signal, over a short timescale (for example, 10 ms), may be considered as a piecewise stationary signal or a short-time stationary signal. Dynamic time warping (DTW) may also be used for speech recognition. Neural networks (NNs) make fewer explicit assumptions about feature statistical properties than HMMs, and thus may be preferred for speech recognition. When used to estimate probabilities of a speech feature segment, NNs allow discriminative training in a natural and efficient manner. However, in spite of their effectiveness in classifying short-time units such as individual phonemes and isolated words, early NNs were rarely successful for continuous recognition tasks because of their limited ability to model temporal dependencies. One approach to this limitation was to use NNs as a pre-processing, feature transformation or dimensionality reduction step prior to HMM based recognition. However, more recently, long short-term memory (LSTM) and related recurrent neural networks (RNNs) and Time Delay Neural Networks (TDNNs) have demonstrated improved performance in this area. Deep Neural Networks (DNNs) and Denoising Autoencoders are also under investigation. A deep feedforward neural network (DNN) is an artificial neural network with multiple hidden layers of units between the input and output layers. Similar to shallow neural networks, DNNs can model complex non-linear relationships. DNN architectures generate compositional models, where extra layers enable composition of features from lower layers, giving a huge learning capacity and thus the potential of modelling complex patterns of speech data. In one example, the ML algorithm comprises a neural network, NN, preferably a convolutional NN, CNN, more preferably a deep CNN, DCNN, preferably wherein the ML algorithm comprises a DCNN and wherein training the ML algorithm using the provided training data comprises training at most N upper layers of the DCNN, wherein N is a natural number greater than or equal to 1, for example 1, 2, 3, 4 or 5, preferably 1, 2 or 3, most preferably 2. In contrast to speech, the set of sensor signals correspond with the respective deterrents and hence may relate to a propeller, a propulsor, a prime mover and/or submerged equipment associated with respective deterrents. In turn, the respective sensor signals may be characterised by periodicity or beat, due, at least in part, to the propeller, the propulsor, the prime mover and/or the submerged equipment associated with respective watercraft. Hence, an aim of training the ML algorithm may be to train based, at least in part, on such beat or periodicity, if present in the set of sensor signals. Nevertheless, ML algorithms for speech recognition may be used in the method according to the first aspect. In one example, the ML algorithm comprises a neural network, NN, preferably a recurrent NN, RNN, more preferably a long short-term memory, LSTM. Long short-term memory (LSTM) is an artificial recurrent neural network (RNN) architecture, used in deep learning. Unlike standard feedforward NNs, LSTM includes feedback connections. LSTM may be used to process single data points (such as images) and data sequences (such as audio or video). A common LSTM unit is composed of a cell, an input gate, an output gate and a forget gate. The cell remembers values over arbitrary time intervals and the three gates regulate the flow of information into and out of the cell. LSTM networks are particularly suited to classifying, processing and making predictions based on time series data, since there can be lags or gaps of unknown duration between important events in a time series. LSTMs were developed to deal with the exploding and vanishing gradient problems that can be encountered when training traditional RNNs. Relative insensitivity to gap length is an advantage of LSTM over RNNs, hidden Markov models and other sequence learning methods. LSTMs may be preferred for the method according to the first aspect because a periodicity or beat, due, at least in part, to the propeller, the propulsor, the prime mover and/or the submerged equipment associated with respective deterrents may include artefacts such as lapses (i.e. missing beats), changes in periodicity such as due to Doppler effects, interference audio effects between multiple propellers and/or external noise, for example. Since LSTMs include feedback connections, the effect of such artefacts on training the ML algorithm may be attenuated and/or overcome. While other audio signals, for example music, may be characterised by periodicity or beat, software for identifying songs, for example Shazam, typically compares a spectrogram (i.e. an audio fingerprint) obtained for a part of a particular song against a database of spectrograms of parts of songs. Other software for identifying the beat of songs, for example Audacity, typically uses intensity thresholding and thus is unable to handle artefacts, as described. That is, such software is distinguished from the ML learning described herein.

Hydroacoustics is the study and application of sound in water. Hydroacoustics, using sonar technology for example, is typically used for monitoring underwater physical and biological characteristics. Hydroacoustics may be used to detect the depth of a water body (bathymetry), as well as the presence or absence, abundance, distribution, size, and behaviour of underwater plants and animals, as well as sea craft. Hydroacoustic sensing involves passive acoustics (i.e. listening for sounds) or active acoustics (i.e. making a sound and listening for the echo). The term acoustic signature may be used to describe a combination of acoustic emissions of sound emitters of sea craft, such as ships and submarines. The acoustic signature is made up of a number of individual signals including: machinery noise, caused by, for example, the sea craft's engine(s), propeller shaft(s), fuel pump(s), air conditioning system(s); cavitation noise, caused by the creation of gas bubbles during rotation of the sea craft's propeller(s); and hydrodynamic noise, caused by the movement of water displaced by the hull of a moving vessel. One of the main causes of hydroacoustic noise from fully submerged lifting surfaces is the unsteady separated turbulent flow near the surface's trailing edge that produces pressure fluctuations on the surface and unsteady oscillatory flow in the near wake. The relative motion between the surface and the ocean creates a turbulent boundary layer (TBL) that surrounds the surface. The noise is caused by the fluctuating velocity and pressure fields within this TBL. These acoustic emissions may depend, at least in part, on the sea craft's hull dimensions, installed machinery and displacement. Hence, different ship classes may have different combinations of acoustic signals that together form a unique signature. The acoustic signature of a sea craft may be reduced by design considerations including: installing machinery having the best possible mechanical tolerances and designed to produce a minimum of noise; decoupling the machinery from the hull by mounting machinery on rubber mounting blocks; designing propellers to reduce cavitation, such as the development of large slow turning propellers; fitting of anechoic tiles to the hull (though poorly fitting and/or loose anechoic tiles may be a source of noise; hydrodynamic efficiency to minimise the perturbation of water; and or care in minimising protrusions from the hull. Such design considerations are typically applied to military sea craft. However, some of those design considerations, such as mechanically-toleranced machinery, propellers for reduced cavitation, hydrodynamic efficiency and/or minimising hull protrusions are important for merchant sea craft also, since they increase fuel efficiency, for example.

In one example, obtaining the training data comprises creating a set of spectrograms, including a first spectrogram, from the set of sensor signals. In one example, the first spectrogram comprises and/or is mel-frequency cepstrum, MFC, spectrogram, a linear spectrogram or a logarithmic spectrogram.

In one example, obtaining the corresponding actions of the first watercraft comprises identifying actions performed by a human operator aboard the first watercraft. That is, the ML algorithm may be trained by determining relationships between the respective sets of sensor signals and the corresponding actions of the watercraft of the set thereof, in which the actions are performed by the human operator and identified by the ML algorithm. That is, the ML algorithm monitors and learns from the human operator, by associating the sensor signals with the identified actions performed by the human operator (i.e. watch and learn).

In one example, obtaining the corresponding actions of the first watercraft comprises identifying remedial (i.e. corrective) actions performed by a human operator aboard the first watercraft responsive to actions implemented by the ML algorithm. That is, the human operator performs one or more remedial actions, so as correct erroneous actions, for example, implemented by the ML algorithm. In this way, the ML algorithm learns from errors implemented thereby, with control overseen by the human operator.

In one example, the actions are selected from controlling a buoyancy, a rudder, a plane such as a bow plane, a sail plane or a stern plane, a thruster, a propeller, a propulsor (such as a pump jet) and/or a prime mover (such as an electric motor) of the watercraft. It should be understood that one or more actions may be performed and/or implemented. Generally, remedial actions may be as described with respect to the actions.

In one example, the actions are evasive actions i.e. to avoid the deterrent, for example diving, slowing and/or hard turning to port or starboard.

In one example, the training data include respective responses of the set of watercraft to the corresponding actions. That is, respective effects on the set of watercraft caused by the corresponding actions are obtained. For example, if a bearing of a watercraft is controlled by adjusting rudder thereof to deviate away from a deterrent, a response to the adjustment may be monitored. In one example, training the ML algorithm comprises determining relationships between the respective sets of sensor signals, the corresponding actions and the respective responses thereto of the watercraft of the set thereof. That is, the ML algorithm may sense deterrents, monitor control actions and measure responses thereto (i.e. a control triangle), thereby providing iterative feedback control.

In one example, the training data include respective trajectory parameters of the set of watercraft, related to a velocity, a depth, a bearing, a pitch, a roll and/or a yaw of the respective watercraft. Suitable detectors for detecting these trajectory parameters are known. That is, respective trajectory parameters of the set of watercraft are obtained, thereby characterising current trajectories thereof and changes thereto, for example caused by the corresponding actions are obtained. For example, if a bearing of a watercraft is controlled by adjusting a rudder thereof to navigate away from a deterrent, such as a trawler, a change in trajectory responsive to the adjustment may be monitored. In one example, training the ML algorithm comprises determining relationships between the respective sets of sensor signals, the respective sets of trajectory parameters, the corresponding actions and optionally, respective responses thereto, of the watercraft of the set thereof. That is, the ML algorithm may sense deterrents, detect trajectories, monitor control actions and optionally measure responses thereto (i.e. a control triangle), thereby providing iterative feedback control.

In one example, the training data include respective sets of shipping parameters, for example charts of shipping lanes. In one example, training the ML algorithm comprising determining relationships between the respective sets of shipping parameters and the corresponding actions of the watercraft of the set thereof. In this way, shipping lanes may be avoided, for example.

In one example, the training data include respective policies and corresponding trajectories of the set of watercraft, wherein each policy relates to navigating a watercraft of the set thereof in the water away from a deterrent and wherein each corresponding trajectory comprises a series of states in a state space of the watercraft; and training the ML algorithm comprising determining relationships between the respective policies and corresponding trajectories of the watercraft of the set thereof based on respective results of comparing the trajectories and the deterrents.

Generally, a policy relates to navigating a watercraft away from the deterrent and is a strategy used by the ML algorithm for navigating the watercraft away from the deterrent. That is, the policy defines actions to be taken by the ML algorithm to navigate the watercraft away from the deterrent according to inter alia the current trajectory and state of the watercraft.

In one example, a policy *π* is defined in terms of a Markov Decision Process to which the policy *π* refers i.e. to navigating the watercraft away from the deterrent. In one example, the ML algorithm comprises and/or is RL agent and the policy (*π*(*s*|*a*)) is a decision-making function used by the agent which calculates an action that provides maximum reward. In one example, the respective policies of the set of watercraft are provided by a single policy, for example a single policy that is updated during the training, for example during the training of a RL agent, as described below.

It should be understood that the watercraft is navigated away from the deterrent. In otherwise, the desired goal is to avoid the deterrent, though the goal may not always be achieved, given an accuracy and/or precision of navigating the watercraft. In one example, respective deterrents of the watercraft are the same target. In this way, the ML algorithm is trained, for example optimised, to navigate the watercraft away from a particular deterrent. In one example, respective deterrents of the watercraft are different. In this way, the ML algorithm is trained to navigate the watercraft away from different deterrents. In one example, respective deterrents of the watercraft are static (i.e. stationary with respect to the environment). In one example, respective deterrents of the watercraft are moving (i.e. non-stationary with respect to the environment).

It should be understood that a trajectory (also known as path) of a watercraft is the path of the watercraft through the water.

Each trajectory comprises the series of states (i.e. successive states) in the state space of the watercraft. Generally, environments comprise two types of spaces: state spaces and action spaces. In a fully observable environment, the total state at each time step in the environment may be sensed, for example by a RL agent. In a partially observable environment, a fraction of the environment may be sensed, for example by a RL agent. The total of all the states in an environment is called the episode, which concludes with the last state, the terminal state. It should be understood that the series of states includes at least two different states. It should be understood that the watercraft has a single state at any given time (i.e. a current state at a current time) and that the watercraft transitions from a current state to a new state, for example directly without a transitionary state or indirectly with a transitionary state.

In one example, navigating the watercraft of the set thereof towards the target comprises actioning state transitions of the watercraft, for example by a controller configured to control the watercraft for example provided by the ML algorithm such as an RL agent. By transitioning between the states, for example repeatedly, the watercraft is navigated (i.e. a net displacement) towards the target.

In one example, the series of states includes finite (i.e. discrete, digital) states of the watercraft. In this way, the watercraft is navigated by transitioning discretely between the finite states, for example directly from a first state to a fourth state, such that the watercraft moves between states. In this way, transitions between relatively different states is accelerated, providing relatively more responsive control. That is, the state space of the watercraft includes N of states, wherein N is a natural number greater than or equal to 2, for example 2, 3, 4, 5, 6, 7, 8, 9, 10 or more, and the series of states includes 2 or more of these N states. It should be understood that the N states are different states, for example corresponding with different configurations of the actions.

In one example, the series of states includes a continuum (i.e. infinite, analogue) states of the watercraft. In this way, the watercraft is navigated by transitioning continuously between the infinite states, for example indirectly from a first state to a fourth state via a second state and a third state, such that the watercraft iterates between states. In this way, transitions between relatively different states is graduated, enabling feedback control thereof.

In one example, each state of the series of states in the state space of the watercraft is associated with (i.e. due to, caused by) an action in an action space (also known as a control space), for example of a controller configured to control the watercraft for example provided by the ML algorithm such as an RL agent. It should be understood that an action causes a state transition of the watercraft.

In one example, the ML algorithm comprises and/or is a reinforcement learning, RL, agent; and training the ML algorithm comprises training the agent, comprising:
(a) actioning, by the agent, a watercraft of the set thereof according to a respective policy, wherein the policy is of an action space of the agent, comprising navigating the watercraft of the set thereof away from a deterrent, thereby defining a corresponding trajectory comprising a series of states in a state space of the watercraft and thereby obtaining respective training data;
(b) determining a relationship between the policy and the trajectory based on a result of comparing the trajectory and the deterrent and updating the policy based on the result; and
(c) repeating steps (a) and (b) for the set of watercraft, using the updated policy.

In one example, the ML algorithm comprises and/or is a reinforcement learning, RL, algorithm, for example a model-based RL algorithm or a model-free RL algorithm. Other algorithms are known. Model-free RL algorithms are preferred, for example: a Q-learning algorithm such a DQN, C51, QR-DQN, HER, DDPG, TD3 or SAC algorithm; or a policy optimisation algorithm such as a policy gradient, A2C / A3C, PPO, TRPO, DDPG, TD3 or SAC algorithm. In one example, the ML algorithm comprises and/or is an ensemble method, using more than one algorithm, for example more than one model-free RL algorithm. In one example, the agent comprises and/or is a Deep Deterministic Policy Gradient, DDPG, agent and/or a Deep Q-Neural Network, DQN, agent.

A second aspect provides a method of controlling a communicatively isolated watercraft, wherein the watercraft is a submarine or a submersible submerged in water, the method implemented, at least in part, by a computer, comprising a processor and a memory, aboard the watercraft, the method comprising:
controlling, by a trained machine learning, ML, algorithm, the watercraft, comprising navigating the watercraft away from a deterrent.

In this way, the watercraft is controlled to navigate away from the deterrent, for example a trawler, by the trained ML algorithm, for example autonomously without communication to an external controller (i.e. not by remote control, without data transmitted thereto).

The watercraft, the computer, the trained ML algorithm, the navigating and/or the deterrent may be as described with respect to the first aspect mutatis mutandis. In one example, the trained ML algorithm is trained according to the method of the first aspect.

In one example, the watercraft is an autonomous and/or unmanned watercraft. In this way, the watercraft is controlled without assistance, for example without actions and/or remedial actions performed by a human operator.

In one example, the method comprises obtaining a set of sensor signals, related to the deterrent, for example as described with respect to the first aspect.

In one example, navigating the watercraft away from the deterrent comprises implementing, by the trained ML algorithm, a first action, wherein the first action is selected from controlling a buoyancy, a rudder, a plane such as a bow plane, a sail plane or a stern plane, a thruster, a propeller, a propulsor and/or a prime mover of the watercraft. In one example, implementing, by the trained ML algorithm, the first action comprises repeatedly and/or iteratively implementing, by the trained ML algorithm, the first action. In one example, implementing, by the trained ML algorithm, the first action comprises, by the trained ML algorithm, the first action according to a policy, for example as described with respect to the first aspect. In one example, navigating the watercraft away from the deterrent comprises implementing, by the trained ML algorithm, a second action, as described with respect to the first action.

In one example, navigating the watercraft away from the deterrent is according to a policy, for example as described with respect to the first aspect. In this way, the trained ML algorithm controls the watercraft to navigate away from the deterrent according to inter alia a current trajectory and a state of the watercraft. In one example, navigating the watercraft away from the deterrent comprises updating the policy, for example as described with respect to the first aspect. In this way, the training of the trained ML algorithm is improved.

A third aspect provides a communicatively isolated watercraft, wherein the watercraft is a submarine or a submersible, including a computer, comprising a processor and a memory, thereaboard, wherein the computer comprises a trained machine learning, ML, algorithm for controlling the watercraft comprising navigating the watercraft away from a deterrent.

A fourth aspect provides a computer comprising a processor and a memory configured to implement a method according to the first aspect and/or the second aspect. A fifth aspect provides a computer program comprising instructions which, when executed by a computer comprising a processor and a memory, cause the computer to perform a method according to the first aspect and/or the second aspect. A sixth aspect provides a non-transient computer-readable storage medium comprising instructions which, when executed by a computer comprising a processor and a memory, cause the computer to perform a method according to any of claims to the first aspect and/or the second aspect. A seventh aspect provides a machine learning, ML, algorithm trained according to the method according to the first aspect.

### BRIEF DESCRIPTION OF THE FIGURES

Embodiments of the invention will now be described by way of example only with reference to the figures, in which:
Figure 1 shows a method according to an exemplary embodiment;
Figure 2 shows a method according to an exemplary embodiment;
Figure 3 shows a method according to an exemplary embodiment; and
Figure 4 shows typical patterns of manoeuvres of (A) longliners; (B) trawlers; and (C) purse seines.

### DETAILED DESCRIPTION

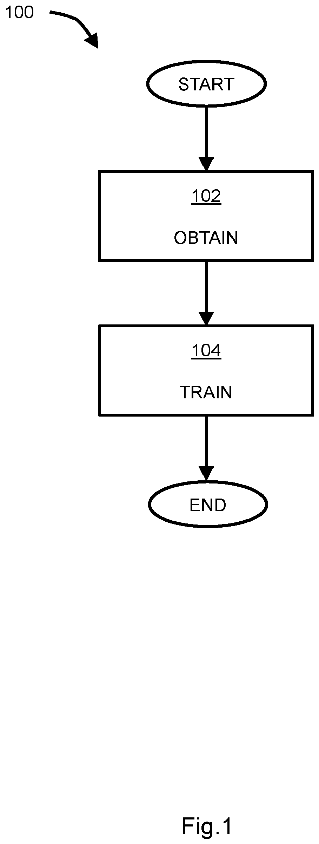

Figure 1 shows a method 100 according to an exemplary embodiment. The method 100 is of training a machine learning, ML, algorithm to control a watercraft. The watercraft is a submarine or a submersible submerged in water. The method is implemented, at least in part, by a computer, comprising a processor and a memory, aboard the watercraft.

At 102, the method comprises obtaining training data including respective sets of sensor signals, related to respective deterrents, and corresponding actions of a set of communicatively isolated watercraft, including a first watercraft.

At 104, the method comprises training the ML algorithm comprising determining relationships between the respective sets of sensor signals and the corresponding actions of the watercraft of the set thereof.

The method 100 may include any of the steps described with respect to the first aspect.

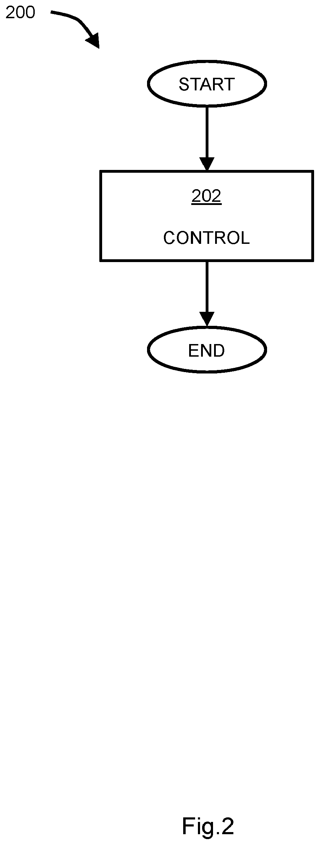

Figure 2 shows a method 200 according to an exemplary embodiment. The method 200 is of controlling a communicatively isolated watercraft. The watercraft is a submarine or a submersible submerged in water. The method is implemented, at least in part, by a computer, comprising a processor and a memory, aboard the watercraft.

At 202, the method comprises controlling, by a trained machine learning, ML, algorithm, the watercraft, comprising navigating the watercraft away from a deterrent.

The method 200 may include any of the steps described with respect to the second aspect.

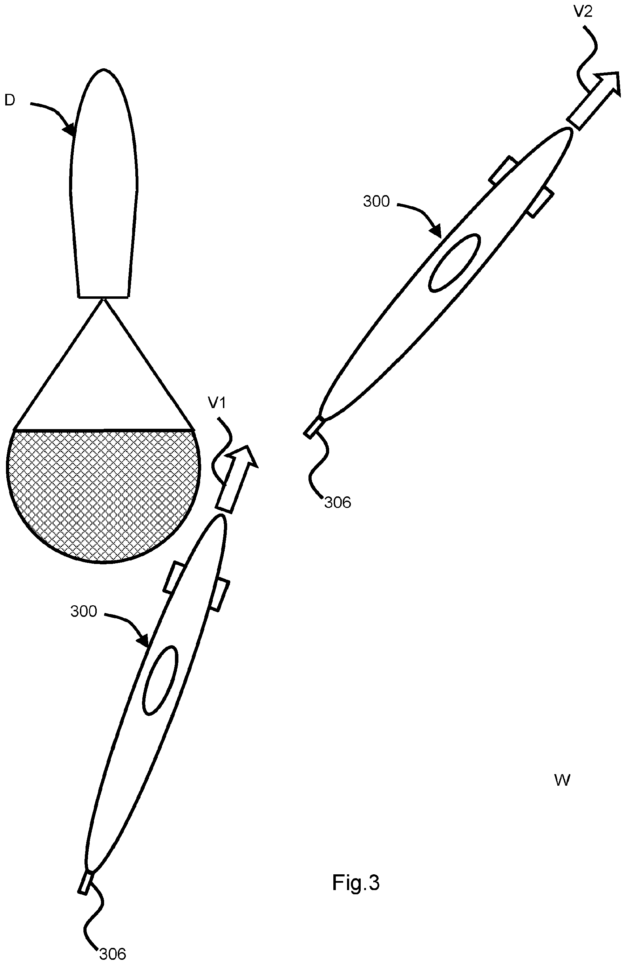

Figure 3 shows a method according to an exemplary embodiment. Particularly, Figure 3 shows a plan view of a submersed submarine 300 moving with an initial velocity V1 in water W. A deterrent D, particularly a trawler pulling a trawl, is sensed, for example as described with respect to the first aspect and/or second aspect, based on SONAR signals (i.e. sensor signals), particularly by detecting manoeuvres and recognizing a pattern therein. To avoid the deterrent D, corresponding actions are actioned: an inclination of the rudder plane 306 is adjusted, such that the submersed submarine 300 moves with a final velocity V2 in the water W. Other actions may be implemented, additionally and/or alternatively, as described with respect to the first aspect and/or second aspect. The sensor signals and the corresponding actions may be used for training the ML algorithm. Alternatively, the trained ML algorithm may implement these actions responsive to sensing the deterrent D.

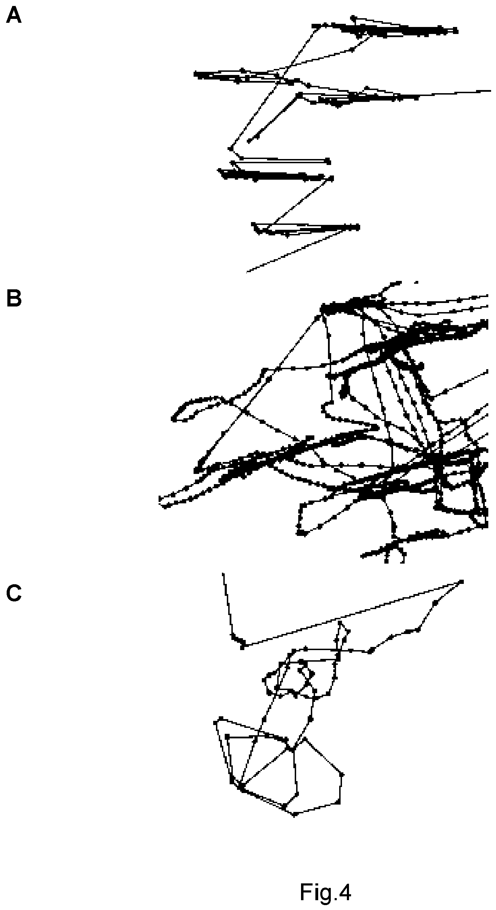

Figure 4 shows typical patterns of manoeuvres of (A) longliners; (B) trawlers; and (C) purse seines. Longliners typically traverse a relatively large area back and forth as they alternately set hooks and return to pull them in. Trawlers typically manoeuvre at constant speeds, such as in zigzag patterns (i.e. boustrophedonically), in relatively smaller areas. Purse seines typically manoeuvre in tight circles in relatively even smaller areas, enclosing schools of fish in their nets.

## Claims

1. A method of training a machine learning, ML algorithm to control a watercraft, wherein the watercraft is a submarine or a submersible submerged in water, the method implemented, at least in part, by a computer, comprising a processor and a memory, aboard the watercraft, the method comprising:
obtaining training data including respective sets of sensor signals, related to respective deterrents, and corresponding actions of a set of communicatively isolated watercraft, including a first watercraft; and
training the ML algorithm comprising determining relationships between the respective sets of sensor signals and the corresponding actions of the watercraft of the set thereof.

2. The method according to claim 1, wherein determining the relationships between the respective sets of sensor signals and the corresponding actions of the watercraft of the set thereof comprises detecting manoeuvres of the respective deterrents.

3. The method according to any previous claim, wherein determining the relationships between the respective sets of sensor signals and the corresponding actions of the watercraft of the set thereof comprises recognizing patterns of manoeuvres of the respective deterrents.

4. The method according to any previous claim, wherein determining the relationships between the respective sets of sensor signals and the corresponding actions of the watercraft of the set thereof comprises classifying the respective deterrents.

5. The method according to any previous claim, wherein obtaining the corresponding actions of the first watercraft comprises identifying actions performed by a human operator aboard the first watercraft.

6. The method according to any previous claim, wherein obtaining the corresponding actions of the first watercraft comprises identifying remedial actions performed by a human operator aboard the first watercraft responsive to actions implemented by the ML algorithm.

7. The method according to any previous claim, wherein the actions are selected from controlling a buoyancy, a rudder, a plane such as a bow plane, a sail plane or a stern plane, a thruster, a propeller, a propulsor and/or a prime mover of the watercraft.

8. The method according to any previous claim, wherein the sets of sensor signals comprise SONAR signals.

9. The method according to any previous claim:
wherein the training data include respective policies and corresponding trajectories of the set of watercraft, wherein each policy relates to navigating a watercraft of the set thereof in the water away from a deterrent and wherein each corresponding trajectory comprises a series of states in a state space of the watercraft; and
wherein training the ML algorithm comprising determining relationships between the respective policies and corresponding trajectories of the watercraft of the set thereof based on respective results of comparing the trajectories and the deterrents.

10. The method according to claim 9:
wherein the ML algorithm comprises and/or is a reinforcement learning, RL, agent; and
wherein training the ML algorithm comprises training the agent, comprising:
(a) actioning, by the agent, a watercraft of the set thereof according to a respective policy, wherein the policy is of an action space of the agent, comprising navigating the watercraft of the set thereof away from a deterrent, thereby defining a corresponding trajectory comprising a series of states in a state space of the watercraft and thereby obtaining respective training data;
(b) determining a relationship between the policy and the trajectory based on a result of comparing the trajectory and the deterrent and updating the policy based on the result; and
(c) repeating steps (a) and (b) for the set of watercraft, using the updated policy.

11. A method of controlling a communicatively isolated watercraft, wherein the watercraft is a submarine or a submersible submerged in water, the method implemented, at least in part, by a computer, comprising a processor and a memory, aboard the watercraft, the method comprising:
controlling, by a trained machine learning, ML, algorithm, the watercraft, comprising navigating the watercraft away from a deterrent.

12. The method according to any of claims 9 to 11, wherein the watercraft is an autonomous and/or unmanned watercraft.

13. The method according to any of claims 9 to 12, comprising obtaining a set of sensor signals, related to the deterrent.

14. A communicatively isolated watercraft, wherein the watercraft is a submarine or a submersible, including a computer, comprising a processor and a memory, thereaboard, wherein the computer comprises a trained machine learning, ML, algorithm for controlling the watercraft comprising navigating the watercraft away from a deterrent.

15. A computer comprising a processor and a memory configured to implement a method according to any of claims 1 to 13, a computer program comprising instructions which, when executed by a computer comprising a processor and a memory, cause the computer to perform a method according to any of claims 1 to 13, a non-transient computer-readable storage medium comprising instructions which, when executed by a computer comprising a processor and a memory, cause the computer to perform a method according to any of claims 1 to 13 or a machine learning, ML, algorithm trained according to the method according to any of claims 1 to 8.
